# EUROPEAN PATENT APPLICATION

(11) **EP 4 613 464 A1**
(43) Date of publication of application: **10.09.2025**
(21) Application number: 23903936.5
(22) Date of filing: 12.12.2023
(51) Int. Cl.: B29C 65/30, H01M 50/183, H01M 50/105, B29C 65/00, H01M 50/178, B29C 35/02, B29L 31/00

(54) **POUCH SEALING DEVICE CAPABLE OF TARGETING HEATING PORTION**

(30) Priority: 12.12.2022 KR 20220173079; 24.05.2023 KR 20230066867
(71) Applicant: LG Energy Solution, Ltd., Seoul 07335 (KR)
(72) Inventor: GWAK, Myeongjun, Daejeon 34122 (KR)
(74) Representative: Goddar, Heinz J.
(86) International application number: PCT/KR2023/020362
(87) International publication number: WO 2024/128733

(57) **Abstract**

The present invention provides a structure of a sealing apparatus including a pair of sealing tool assemblies including an exothermic sealing tool, an endothermic sealing tool and an endothermic/exothermic device. Each of the exothermic sealing tool and the endothermic sealing tool each extends along a widthwise direction of a pouch, and are juxtaposed with each other along a lengthwise direction of the pouch. The endothermic/exothermic device is interposed between the exothermic sealing tool and the endothermic sealing tool to radiate heat to the exothermic sealing tool and absorbs heat from the endothermic sealing tool.

## Description

### [TECHNICAL FIELD]

This application claims the benefit of priority based on Korean Patent Application No. 10-2022-0173079 filed on December 12, 2022, and Korean Patent Application No. 10-2023-0066867 filed on May 24, 2023, entire content disclosed in the document of the patent applications is included as a part of this specification.

The present invention relates to a sealing apparatus for fusion-sealing a pouch accommodating an electrode assembly in a pouch-type battery cell.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices.

These secondary batteries are attracting attention as a new energy source for improving eco-friendliness and energy efficiency, not only because they have the primary advantage of being able to dramatically reduce the use of fossil fuels, but also because they do not generate any by-products due to energy use.

Types of currently and widely used secondary batteries include lithium ion batteries, lithium polymer batteries, nickel cadmium batteries, nickel hydrogen batteries, and nickel zinc batteries. The operating voltage of these secondary battery cells, that is, the operating voltages of the unit battery cells are approximately 2.5V to 4.5V. Therefore, when a higher output voltage is necessary, a battery pack may be manufactured by connecting multiple battery cells in series. In addition, a battery pack may be manufactured by connecting multiple battery cells in parallel depending on the charge and discharge capacity necessary for the battery pack. Therefore, the number of battery cells included in the battery pack and the type of electrical connection may be selected in various ways depending on the necessary output voltage and/or charge and discharge capacity.

Meanwhile, in general, depending on the shape of the battery case, secondary batteries are classified into cylindrical batteries and prismatic batteries in which the electrode assembly is built into a cylindrical and prismatic metal can, respectively, and pouch-type batteries in which the electrode assembly made of a pouch film of metal foil material is built into a pouch-type case.

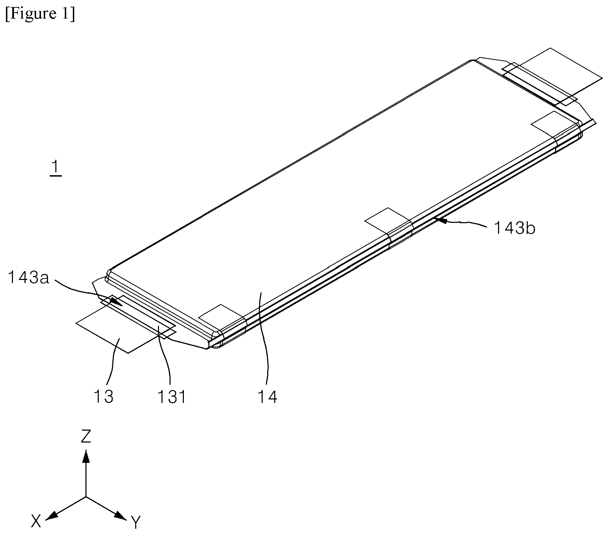

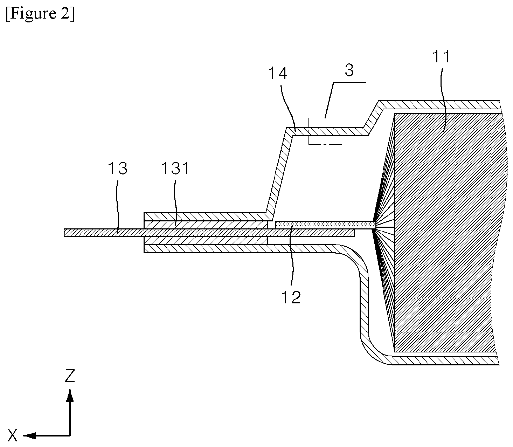

FIG. 1 is a perspective view illustrating the structure of a pouch-type battery cell, and FIG. 2 is a cross-sectional view illustrating a sealed portion of the pouch-type battery cell. Referring to FIGS. 1 and 2, a pouch-type battery cell is manufactured by accommodating an electrode assembly 11 having therein a plurality of electrodes and separators alternately stacked in a pouch 14 made of a metal sheet material. The pouch 14 surrounds the electrode assembly 11 and is sealed at the first sealed portion 143a and the second sealed portion 143b. An electrode tab 12 extends from the plurality of electrodes and is welded to an electrode lead 13, and the electrode lead 13 protrudes out of the pouch 14 through the first sealed portion 143a. Here, a lead film 131 made of thermoplastic synthetic resin provided on the electrode lead 13 is interposed between the pouch 14 and the electrode lead 13.

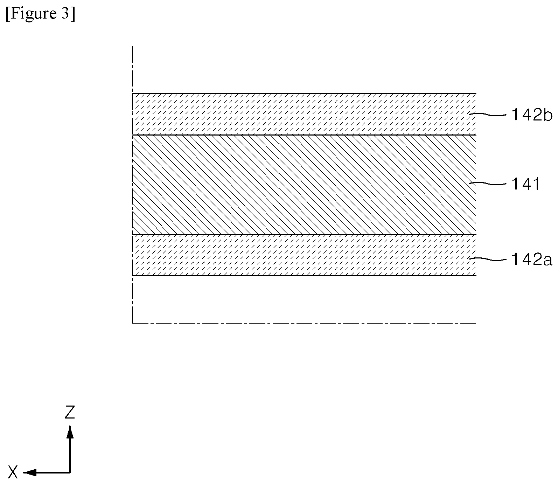

FIG. 3 is an enlarged cross-sectional view illustrating a structure of an insulating layer of a pouch. Referring to FIG. 3, the pouch 14 includes a metal layer 141 and an internal insulating layer 142a and an external insulating layer 142b coated on the inner and outer surfaces of the metal layer 141, respectively. Each of the internal insulating layer 142a and the external insulating layer 142b includes thermoplastic synthetic resin, and the internal insulating layer 142a insulates the electrode assembly 11 and the electrode tab 12 from the metal layer 141, and the external insulating layer 142b insulates the outside of the pouch 14 from the metal layer 141.

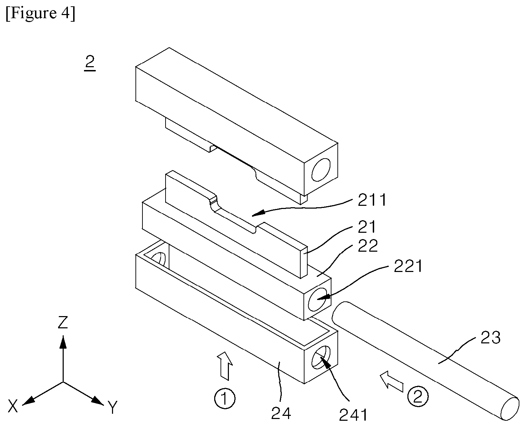

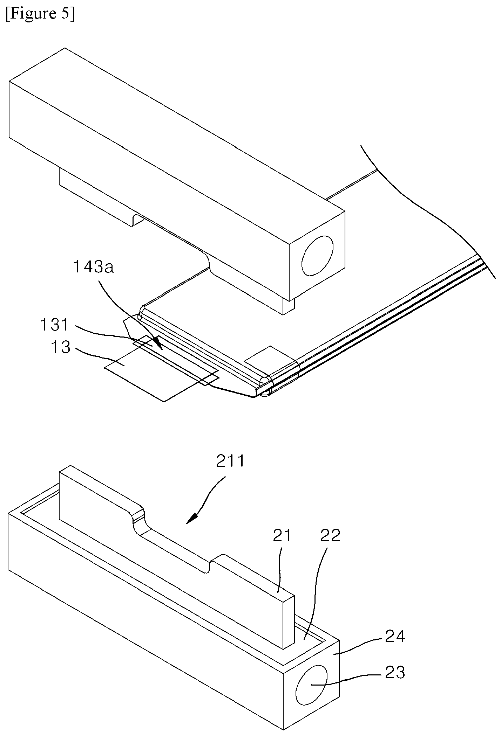

FIGS. 4 and 5 illustrate structure and arrangement of a general sealing apparatus. Referring to FIGS. 4 and 5, a sealing apparatus 2 is used to seal the pouch 14. Hereinafter, a sealing apparatus for forming the first sealed portion 143a will be exemplified. However, the same applies to the second sealed portion 143b.

The sealing apparatus 2 includes a sealing tool 21 that applies pressure and heats where the first sealed portion 143a is to be formed, a sealing block 22 connected to the sealing tool 21, an insulating frame 24 accommodating the sealing block 22, and a heating rod 23 inserted in the sealing block 22. A pair of sealing apparatuses 2 is disposed above and below where the first sealed portion 143a is to be formed. Here, the sealing tool 21 is provided with a groove 211 having a shape corresponding to the electrode lead 13.

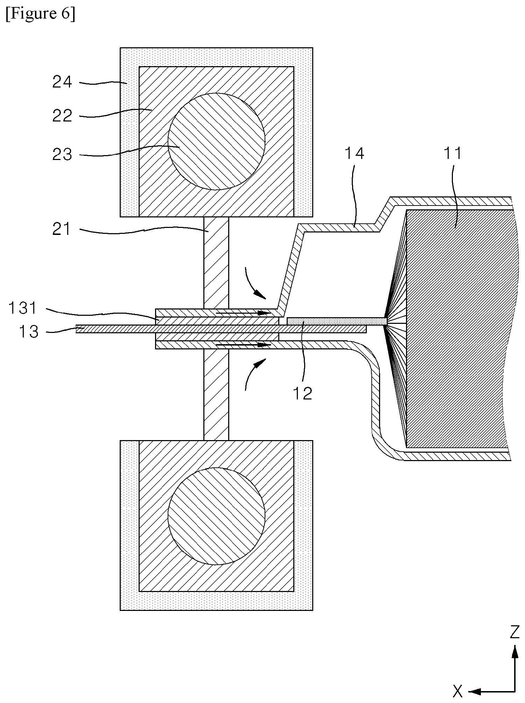

FIG. 6 is a cross-sectional view illustrating the sealing apparatus of FIG. 4 sealing the pouch. When the heating rod 23 heats the sealing block 22, the sealing tool 21 is heated through the sealing block 22, and the sealing tool 21 applied pressure and heats where the first sealed portion 143a is to be formed, thereby fusing the internal insulating layer 142a and the lead film 131 to seal the pouch 14.

Meanwhile, the melting point of polypropylene resin, which is mainly used as a material for the internal insulating layer 142a and the lead film 131, is about 160 degrees Celsius. Therefore, the sealing tool 21 must be heated to a temperature than 160 degrees Celsius. When sealing is performed, not only the heat energy of the sealing tool 21 is directly conducted to where the first sealed portion 143a is to be formed but also conduction heat conducted from the first sealed portion 143a along the metal layer 141 and radiant heat and convection heat conducted from the sealing tool 21 to the pouch 14 may reach portions of the pouch 14 other than where the first sealed portion 143a is to be formed. Such conductive heat, radiant heat and convection heat may melt the insulating layer 142 to cause damage, and thus, there is a risk that the insulating performance of the pouch 14 may be degraded.

In addition, since the sealing tool 21 is directly exposed to the air, heat energy is lost in the form of radiant heat and convection heat, and energy efficiency is reduced.

### [DETAILED DESCRIPTION OF THE INVENTION]

### [TECHNICAL PROBLEM]

In order to solve above-described problems of the prior art, it is an object of the present invention to provide a structure of a sealing apparatus capable of minimizing heat conduction to portions other than the portion to be sealed when sealing a pouch.

It is another object of the present invention to provide a structure of a sealing apparatus capable of improving the insulation performance of a battery cell and reducing the defect rate by preventing damage to the internal insulating layer and external insulating layer of a pouch.

It is yet another object of the present invention to provide a structure of a sealing apparatus capable of cooling portions other than the portion to be sealed to below room temperature during sealing.

It is yet another object of the present invention to provide a structure of a sealing apparatus capable of precisely targeting a portion to be heated during sealing, thereby heating only the desired portion without heating other portions.

It is yet another object of the present invention to provide a structure for a sealing apparatus capable of minimizing heat loss and improving energy efficiency.

It is yet another object of the present invention to provide a structure of a sealing apparatus capable of quickly heating a portion to be heated to a high temperature and maintaining the same heated at a constant temperature.

It is yet another object of the present invention to provide a sealing apparatus having a simple structure and manufactured with minimum number of parts.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above problems, the present invention provides a structure of a sealing apparatus including a pair of sealing tool assemblies including an exothermic sealing tool, an endothermic sealing tool and an endothermic/exothermic device.

### [FIRST EMBODIMENT]

The first embodiment of the present invention may be applied to a sealing apparatus for forming a first sealed portion by fusion provided at two lengthwise ends of a pouch of a pouch-type battery cell along a widthwise direction of the pouch. The pouch-type battery cell may include an electrode lead extending from inside of the pouch and protruding through the first sealed portion.

An exothermic sealing tool may extend along the widthwise direction of the pouch. The exothermic sealing tool may be provided with a first groove corresponding to a shape of the electrode lead.

According to the first embodiment of the present invention, the first groove may be formed by recessing a portion of the widthwise center of one heightwise end of the exothermic sealing tool toward the other heightwise end. The length of the first groove in the widthwise direction of the pouch may be equal to the width of the electrode lead, and the depth of the first groove may be equal to the thickness of the electrode lead or half thereof.

An endothermic sealing tool may extend along the widthwise direction of the pouch. The endothermic sealing tool may be provided with a second groove corresponding to the shape of the electrode lead.

According to the first embodiment of the present invention, the second groove may be formed by recessing a portion of the widthwise center of one heightwise end of the endothermic sealing tool toward the other heightwise end. The length of the second groove in the widthwise direction of the pouch may be equal to the width of the electrode lead, and the depth of the second groove may be equal to the thickness of the electrode lead or half thereof.

The endothermic sealing tool may be juxtaposed with the exothermic sealing tool along a lengthwise direction of the pouch. Here, one endothermic sealing tool may be provided for each sealing tool assembly, or two or more endothermic sealing tools may be provided for each sealing tool assembly. When one endothermic sealing tool is provided for each sealing tool assembly, the endothermic sealing tool may be disposed inner than the exothermic sealing tool in the lengthwise direction of the pouch, and when two endothermic sealing tools are provided for each sealing tool assembly, the endothermic sealing tools may be disposed at two lengthwise sides of the exothermic sealing tool.

An endothermic/exothermic device may be interposed between the exothermic sealing tool and the endothermic sealing tool, simultaneously radiate and absorb heat to the exothermic sealing tool and from the endothermic sealing tool, respectively. For example, the endothermic/exothermic device may radiate heat through a first side thereof and absorb heat through a second side thereof opposite to the first surface as current is applied, and be interposed between the exothermic sealing tool and the endothermic sealing tool with the first side in contact with the exothermic sealing tool and the second side in contact with the endothermic sealing tool.

A plurality of endothermic/exothermic devices may be provided to be in contact with wider surfaces of the exothermic sealing tool and the endothermic sealing tool. Specifically, a plurality of endothermic/exothermic devices arranged in grid formation may be provided to be in contact with surfaces of the exothermic sealing tool and the endothermic sealing tool parallel to the lengthwise directions of the pouch.

According to the first embodiment of the present invention, the endothermic/exothermic device may include a thermoelectric element that radiates heat through a first surface thereof and absorbs heat through a second surface thereof opposite to the first surface as current is applied. The thermoelectric element is a type of semiconductor device including multiple pairs of P-type semiconductors and N-type semiconductors connected electrically in series and thermally in parallel and capable of maintaining a constant temperature difference between the first side and the second side when a constant DC voltage is applied.

The sealing tool assembly may further include an insulating plate disposed in a space between the exothermic sealing tool and the endothermic sealing tool where the endothermic/exothermic device is not provided. The insulating plate may include an insulating material.

According to the first embodiment of the present invention, an insulating plate includes a plate made of insulating material and is interposed between the exothermic sealing tool and the endothermic sealing tool. The insulating plate may be provided with a through-hole in which the endothermic/exothermic device is mounted.

The sealing apparatus of the present invention may further include a pair of insulating frames accommodating the pair of sealing tool assemblies, respectively. Each of the insulating frames may have five closed sides covering five sides of each of the sealing tool assemblies, respectively, excluding a first heightwise end and a second heightwise end thereof facing the first sealed portion, respectively.

### [SECOND EMBODIMENT]

The second embodiment of the present invention may be applied to a sealing apparatus for forming a second sealed portion by fusion provided at one widthwise end of a pouch of a pouch-type battery cell along a lengthwise direction of the pouch. The pouch-type battery cell may include an electrode lead extending from inside of the pouch and protruding through the second sealed portion, and

An exothermic sealing tool may extend along the lengthwise direction of the pouch.

An endothermic sealing tool may extend along the lengthwise direction of the pouch.

The endothermic sealing tool may be juxtaposed with the exothermic sealing tool along a widthwise direction of the pouch. Here, one endothermic sealing tool may be provided for each sealing tool assembly, or two or more endothermic sealing tools may be provided for each sealing tool assembly. When one endothermic sealing tool is provided for each sealing tool assembly, the endothermic sealing tool may be disposed inner than the exothermic sealing tool in the widthwise direction of the pouch, and when two endothermic sealing tools are provided for each sealing tool assembly, the endothermic sealing tools may be disposed at two widthwise sides the exothermic sealing tool.

An endothermic/exothermic device may be interposed between the exothermic sealing tool and the endothermic sealing tool, simultaneously radiate and absorb heat to the exothermic sealing tool and from the endothermic sealing tool, respectively. For example, the endothermic/exothermic device may radiate heat through a first side thereof and absorb heat through a second side thereof opposite to the first surface as current is applied, and be interposed between the exothermic sealing tool and the endothermic sealing tool with the first side in contact with the exothermic sealing tool and the second side in contact with the endothermic sealing tool.

A plurality of endothermic/exothermic devices may be provided to be in contact with wider surfaces of the exothermic sealing tool and the endothermic sealing tool. Specifically, a plurality of endothermic/exothermic devices arranged in grid formation may be provided to be in contact with surfaces of the exothermic sealing tool and the endothermic sealing tool parallel to the lengthwise directions of the pouch.

According to the second embodiment of the present invention, the endothermic/exothermic device may include a thermoelectric element that radiates heat through a first surface thereof and absorbs heat through a second surface thereof opposite to the first surface as current is applied. The thermoelectric element is a type of semiconductor device including multiple pairs of P-type semiconductors and N-type semiconductors connected electrically in series and thermally in parallel and capable of maintaining a constant temperature difference between the first side and the second side when a constant DC voltage is applied.

The sealing tool assembly may further include an insulating plate disposed in a space between the exothermic sealing tool and the endothermic sealing tool where the endothermic/exothermic device is not provided. The insulating plate may include an insulating material.

According to the second embodiment of the present invention, an insulating plate includes a plate made of insulating material and is interposed between the exothermic sealing tool and the endothermic sealing tool. The insulating plate may be provided with a through-hole in which the endothermic/exothermic device is mounted.

The sealing apparatus of the present invention may further include a pair of insulating frames accommodating the pair of sealing tool assemblies, respectively. Each of the insulating frames may have five closed sides covering five sides of each of the sealing tool assemblies, respectively, excluding a first heightwise end and a second heightwise end thereof facing the second sealed portion, respectively.

### [ADVANTTAGEOUS EFFECTS]

The present invention may provide a structure of a sealing apparatus capable of preventing battery cell defects and improving performance using an endothermic sealing tool absorbing heat from a pouch excluding the sealed portion thereof when heating the sealed portion with the exothermic sealing tool, thereby preventing heat transfer to portions other than the sealed portion and preventing damage to the insulating layer.

In addition, by using a thermoelectric element, the present invention may provide a structure of a sealing apparatus with high efficiency by directly transferring heat energy absorbed by endothermic sealing tool to the exothermic sealing tool as well as a structure of a sealing apparatus having a simple structure capable of simultaneously heating to over 150 degrees Celsius and cooling to room temperature or below merely by applying a voltage.

The sealing apparatus according to the second embodiment of the present invention may intensively heat and seal only the desired area by juxtaposing the endothermic sealing tool at both sides of the exothermic sealing tool.

It is yet advantageous in that the present invention may provide a structure of a sealing apparatus with minimum heat loss by covering the five sides of the exothermic sealing tool except one side facing the sealed portion with the endothermic sealing tool, insulating plate and insulating frame.

It is yet advantageous in that the present invention may provide a structure of a sealing apparatus capable of quick heating and cooling and maintaining the temperature constant by providing a plurality of endothermic/exothermic devices to be in contact with wider surface of the exothermic sealing tool and the endothermic sealing tool.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 is a perspective view illustrating a structure of a pouch-type battery cell, and FIG. 2 is a cross-sectional view illustrating a first sealed portion of the pouch-type battery cell.
FIG. 3 is an enlarged cross-sectional view illustrating a structure of an insulating layer of a pouch.
FIGS. 4 and 5 illustrate structure and arrangement of a general sealing apparatus.
FIG. 6 is a cross-sectional view illustrating the sealing apparatus of FIG. 4 sealing the pouch.
FIGS. 7 and 8 are exploded perspective view and perspective view, respectively, illustrating a structure of a sealing tool assembly according to a first embodiment of the present invention.
FIGS. 9 and 10 illustrate a structure of a thermoelectric element and heating and cooling action of the thermoelectric element, respectively, according to the first embodiment of the present invention.
FIG. 11 illustrates the sealing tool assembly being accommodated in an insulating frame according to the first embodiment of the present invention.
FIG. 12 illustrates an arrangement of the sealing apparatus according to the first embodiment of the present invention.
FIG. 13 is a cross-sectional view illustrating the sealing apparatus sealing the pouch according to the first embodiment of the present invention.
FIG. 14 illustrates the movement of heat when the sealing apparatus seals the pouch according to the first embodiment of the present invention.
FIGS. 15 and 16 are exploded perspective view and perspective view, respectively, illustrating a structure of a sealing tool assembly according to a second embodiment of the present invention.
FIG. 17 illustrates the sealing tool assembly being accommodated in an insulating frame according to the second embodiment of the present invention.
FIG. 18 illustrates an arrangement of the sealing apparatus according to the second embodiment of the present invention.
FIG. 19 is a cross-sectional view illustrating the sealing apparatus sealing the pouch according to the second embodiment of the present invention.

### [DESCRIPTION OF REFERENCE NUMERALS]

1: battery cell
   11: electrode assembly
   12: electrode tab
   13: electrode lead
      131: lead film
   14: pouch
      141: metal layer
      142: insulating layer
         142a: internal insulating layer
         142b: external insulating layer
      143: sealed portion
         143a: first sealed portion
         143b: second sealed portion
2: sealing apparatus1
   21: sealing tool
      211: groove
   22: sealing block
      221: first hole
   23: heating rod
   24: insulating frame
      241: second hole
3: sealing apparatus2
   31: exothermic sealing tool
      311: first groove
   32: endothermic sealing tool
      321: second groove
   33: endothermic/exothermic device (Peltier element)
   34: insulating plate
   35: insulating frame
4: sealing apparatus3
   41: exothermic sealing tool
   42: endothermic sealing tool
   43: endothermic/exothermic device (Peltier element)
   44: insulating plate
   45: insulating frame
X: lengthwise direction
Y: widthwise direction
Z: heightwise direction/thicknesswise direction

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, an example of a structure of a pouch-type battery cell that may be sealed by the sealing apparatus according to the present invention will be described with reference to the drawings.

FIG. 1 is a perspective view illustrating a structure of a pouch-type battery cell, and FIG. 2 is a cross-sectional view illustrating a first sealed portion of the pouch-type battery cell. Referring to FIGS. 1 and 2, a pouch-type battery cell 1 may include an electrode assembly 11, an electrode tab 12, an electrode lead 13 and a pouch 14.

The electrode assembly 11 may be formed by repeatedly stacking a plurality of electrodes with a separator interposed therebetween. The electrode may include an anode and a cathode. That is, the electrode assembly 11 may be formed by repeatedly and alternately stacking a plurality of anodes and cathodes with a separator interposed therebetween.

The electrode tab 12 may extend from each electrode of the electrode assembly 11. The plurality of electrode tabs 12 of the same polarity extending from the plurality of electrodes, respectively, may be stacked to collectively form a single tab. That is, a plurality of anodes may be connected in parallel to collectively form an electrode tab 12, and a plurality of cathodes may be connected in parallel to collectively form another electrode tab 12.

The pouch 14 may include metal sheet material. The pouch 14 may surround and accommodate the electrode assembly 11. The pouch 14 may be sealed at a first sealed portion 143a provided at two lengthwise ends thereof and extending along the widthwise direction thereof, and at a second sealed portion 143b provided at one widthwise end thereof and extending along the lengthwise direction thereof. Each of the sealed portions may be formed by fusion. The sealing method of the pouch 14 will be described later.

The electrode lead 13 may be connected to the electrode tab 12. The connection may be established by welding. The welding may be accomplished by various methods such as ultrasonic welding, resistance welding and laser welding. The electrode lead 13 may extend along the lengthwise direction of the pouch and protrude from the pouch 14 through the first sealed portion 143a.

Here, a lead film 131 may be provided at the electrode lead 13. The lead film 131 may be provided at a position corresponding to the first sealed portion 143a and interposed between the two layers of the pouch 14. The lead film 131 may include fusionable material such as thermoplastic synthetic resin. The lead film 131 may include a material with electrically insulating properties. For example, the lead film 131 may include polypropylene material.

FIG. 3 is an enlarged cross-sectional view illustrating a structure of an insulating layer of a pouch. Referring to FIG. 3, the pouch 14 may include a metal layer 141 and an insulating layer 142. The insulating layer 142 may include an internal insulating layer 142a and an external insulating layer 142b.

The metal layer 141 may include a metal sheet material. The metal layer 141 may include an electrically conductive metal material. For example, the metal layer 141 may include aluminum.

The insulating layer 142 may include a material with electrically insulating property. For example, the insulating layer may include a synthetic resin with electrically insulating property.

The internal insulating layer 142a may be coated on the inner surface of the metal layer 141. The internal insulating layer 142a may include fusionable material such as thermoplastic synthetic resin. For example, the internal insulating layer 142a may include polypropylene material. The internal insulating layer 142a may insulate the electrode assembly 11, the electrode tab 12, the electrode lead 13 and the metal layer 141 from one another.

The external insulating layer 142b may be coated on the outer surface of the metal layer 141. The external insulating layer 142b may include the same material as the internal insulating layer 142a. The external insulating layer 142b may insulate the metal layer 141 from the outside of the pouch 14. For example, the external insulating layer 142b may insulate metal layers of the pouches of a plurality of battery cells 1 from each other when the plurality of battery cells 1 are stacked to form a battery module.

The first sealed portion 143a may be formed by fusion-sealing. The fusion-sealing may be achieved by subjecting the internal insulating layer 142a and the lead film 131 to fusion. Specifically, the sealing between the two layers of pouches 14 is achieved by subjecting the internal insulating layers 142a to fusion, and the sealing between the pouch 14 and the electrode lead 13 is achieved by subjecting the lead film 131 to fusion. Accordingly, the pouch 14 may be sealed with two metal layers 141 insulated from each other, and the electrode lead 13 also insulated from the metal layers of the pouch 14.

When both the lead film 131 and the internal insulating layer 142a are made of polypropylene, a sealing apparatus capable of heating and applying pressure to the portion to be sealed to over 160 degrees Celsius is necessary to form the first sealed portion 143a due to the polypropylene having the melting point of about 160 degrees Celsius.

The second sealed portion 143b may be formed by fusion-sealing. The fusion-sealing may be achieved by subjecting the internal insulating layer 142a to fusion. As a result, the pouch 14 may be sealed with metal layers 141 insulated from each other.

When the internal insulating layer 142a is made of polypropylene, a sealing apparatus capable of heating and applying pressure to the portion to be sealed to over 160 degrees Celsius is necessary to form the second sealed portion 143b due to the polypropylene having the melting point of about 160 degrees Celsius.

Hereinafter, the structure and the problems of conventional sealing apparatus will be described. Hereinafter, while the first sealed portion 143a is exemplified, the structure and the problems of the second sealed portion 143b are also the same.

FIGS. 4 and 5 illustrate structure and arrangement of a general sealing apparatus. Referring to FIGS. 4 and 5, a conventional sealing apparatus 2 includes a sealing tool 21, a sealing block 22, a heating rod 23 and an insulating frame 24.

The sealing tool 21 includes metal material and extends along the widthwise direction of the pouch. A groove 211 having a width and a depth corresponding to the width and the thickness of the electrode lead 13 is provided at the widthwise center of the sealing tool 21.

The sealing block 22 is connected to the sealing tool 21. The sealing block 22 is made of metal material and extends along the widthwise direction of the pouch. The first hole 221 extending in the widthwise direction of the pouch is provided in the sealing block 22.

The insulating frame 24 has one open heightwise end, and accommodates the sealing block 22. The insulating frame 24 includes an insulating material. Second holes 241 corresponding to the first holes 221 are provided at the two widthwise ends of the insulating frame 24, respectively.

The heating rod 23 is inserted into the first holes 221 through the second holes 241. The heating rod 23 may be heated, and in turn, the sealing block 22 and the sealing tool 21 are heated.

A pair of sealing apparatuses 2 is provided along the heightwise direction of the pouch in a manner that the sealing tools 21 face each other. When sealing the pouch 14, the pair of sealing apparatuses 2 is disposed at two heightwise sides of the portion to be sealed of the pouch to form the first sealed portion 143a.

FIG. 6 is a cross-sectional view illustrating the sealing apparatus of FIG. 4 sealing the pouch. Referring to FIG. 6, as the heated sealing tool 21 heats and applies pressure to the portion to be sealed to form the first sealed portion 143a, the lead film 131 and the internal insulating layer 142a are melted, re-solidified and fused to seal the pouch 14 and the electrode lead 13.

Here, heat conducted from the sealing tool 21 to the pouch 14 may be conducted along the metal layer 141 to portions of the pouch 14 other than the first sealed portion 143a. Heat is also conducted from the sealing tool 21 to the pouch 14 through radiation and convection. Due to such conductive heat, radiant heat and convection heat, portions of the pouch 14 other than the first sealed portion 143a are also heated such that the internal insulating layer 142a and/or the external insulating layer 142b may be melted and damaged. When the insulating layer 142 is damaged, the performance of the battery cell 1 may degraded, and there is a risk that a short circuit may occur, leading to ignition.

Additionally, heat conducted from the sealing tool 21 to portions other than the first sealed portion 143a is not recovered and is lost, thereby reducing the energy efficiency of the sealing apparatus 2.

Accordingly, the present invention provides a structure of a sealing apparatus including a pair of sealing tool assemblies including an exothermic sealing tool, an endothermic sealing tool and an endothermic/exothermic device.

Hereinafter, preferred embodiments of the present invention will be described with reference to the accompanying drawings.

### [FIRST EMBODIMENT]

The sealing apparatus according to the first embodiment of the present invention may be used to form the first sealed portion.

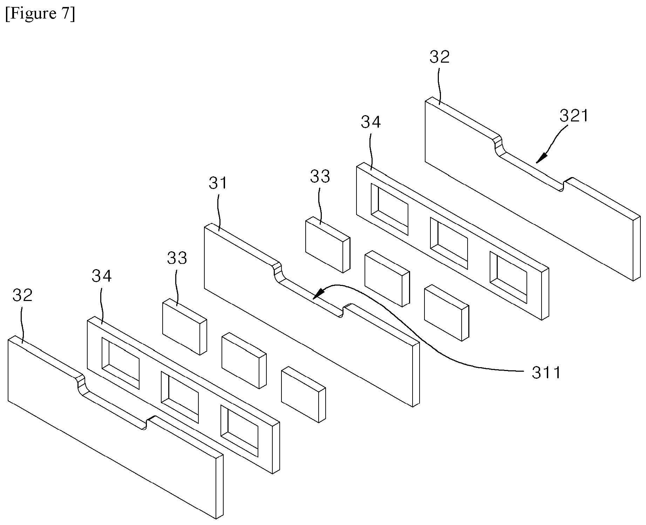

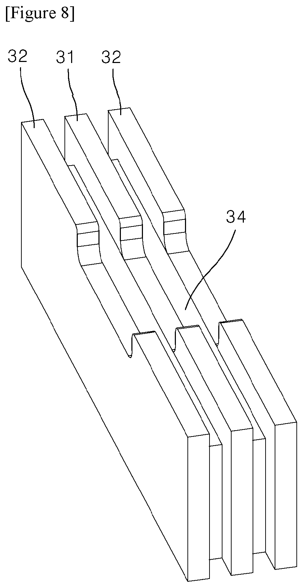

FIGS. 7 and 8 are exploded perspective view and perspective view, respectively, illustrating a structure of a sealing tool assembly according to a first embodiment of the present invention. Referring to FIGS. 7 and 8, the sealing apparatus according to the present invention may include a pair of sealing tool assemblies, each of the pair of sealing tool assemblies including an exothermic sealing tool 31, an endothermic sealing tool 32 and an endothermic/exothermic device 33.

An exothermic sealing tool 31 may include metal material and extend along the widthwise direction of the pouch. The exothermic sealing tool 31 may be provided with a first groove 311 corresponding to a shape of the electrode lead 13. The first groove 311 may be formed by recessing a portion of the widthwise center of one heightwise end of the exothermic sealing tool toward the other heightwise end. The length of the first groove 311 in the widthwise direction of the pouch may be equal to the width of the electrode lead 13, and the depth of the first groove 311 may be equal to the thickness of the electrode lead 13 or half thereof.

An endothermic sealing tool 32 may include metal material and extend along the widthwise direction of the pouch. The endothermic sealing tool 32 may be provided with a second groove 321 corresponding to the shape of the electrode lead 13. The second groove 321 may be formed by recessing a portion of the widthwise center of one heightwise end of the endothermic sealing tool toward the other heightwise end. The length of the second groove 321 in the widthwise direction of the pouch may be equal to the width of the electrode lead 13, and the depth of the second groove 321 may be equal to the thickness of the electrode lead 13 or half thereof.

The endothermic sealing tool 32 may be juxtaposed with the exothermic sealing tool 31 along the lengthwise direction of the pouch. Here, one endothermic sealing tool 32 may be included in each sealing tool assembly, or two endothermic sealing tools 32 may be included in each sealing tool assembly. When one endothermic sealing tool 32 is provided in each sealing tool assembly, the endothermic sealing tool 32 may be disposed inner than the exothermic sealing tool 31 in the lengthwise direction. When two endothermic sealing tools 32 are provided in each sealing tool assembly, the endothermic sealing tools 32 may be disposed at two lengthwise sides of the exothermic sealing tool.

The endothermic/exothermic device 33 may be interposed between the exothermic sealing tool 31 and the endothermic sealing tool 32. The endothermic/exothermic device 33 may radiate heat through a first surface thereof and absorbs heat through a second surface thereof opposite to the first surface. The endothermic/exothermic device 33 may be provided in a manner that the first surface thereof is in contact with the exothermic sealing tool 31 and the second surface thereof in contact with the endothermic sealing tool 32. Accordingly, the endothermic/exothermic device 33 may heat the exothermic sealing tool 31 and cool the endothermic sealing tool 32. Preferably, when a voltage is applied to the endothermic/exothermic device 33, the first surface thereof radiates heat and the second surface thereof absorbs heat, thereby heating the exothermic sealing tool 31 and cooling the endothermic sealing tool 32.

A plurality of endothermic/exothermic devices 33 may be provided to be in contact with wider surfaces of the exothermic sealing tool 31 and the endothermic sealing tool 32. Specifically, a plurality of endothermic/exothermic devices 33 arranged in grid formation may be provided to be in contact with surfaces of the exothermic sealing tool 31 and the endothermic sealing tool 32 parallel to the lengthwise directions of the pouch. As the plurality of endothermic/exothermic devices 33 are in contact with the exothermic sealing tool 31 and the endothermic sealing tool 32 at plurality of points, heating and cooling may occur quickly and at a high level, and maintaining heated state and cooled state is facilitated.

The sealing tool assembly may include an insulating plate 34. The insulating plate 34 may be disposed in a space between the exothermic sealing tool 31 and the endothermic sealing tool 32 where the endothermic/exothermic device 33 is not provided. The insulating plate 34 may include an insulating material. The insulating plate 34 may be interposed between the exothermic sealing tool 31 and the endothermic sealing tool 32, and provided with a through-hole in which the endothermic/exothermic device 33 is mounted. By providing the insulating plate 34, heat conduction between the exothermic sealing tool 31 and the endothermic sealing tool 32 occurs only through the area where the endothermic/exothermic device 33 is provided, and heat energy of the exothermic sealing tool 31 is prevented from conducted to the endothermic sealing tool 32 through other portions.

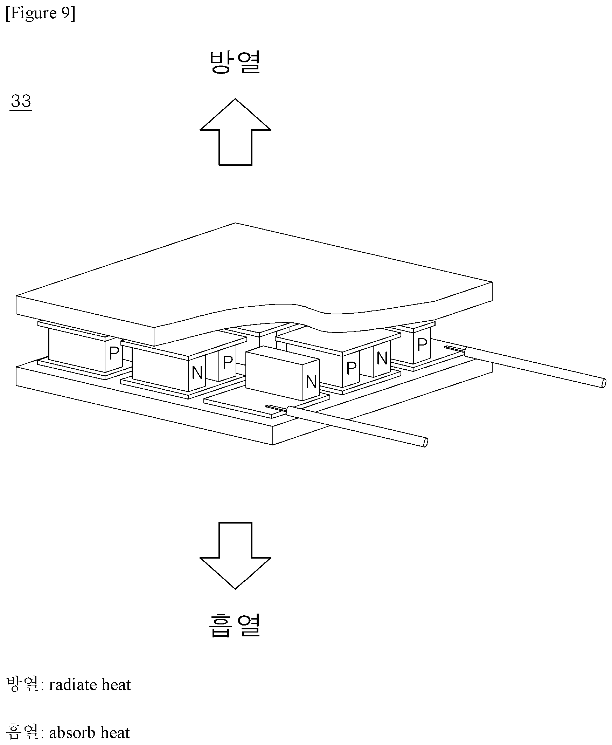

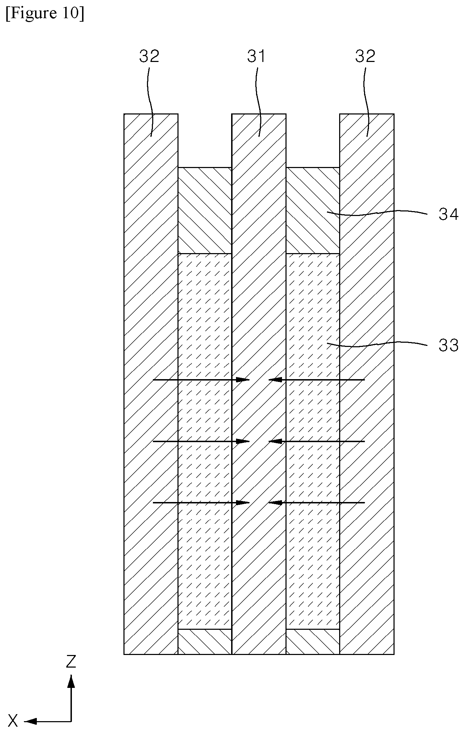

FIGS. 9 and 10 illustrate a structure of a thermoelectric element and heating and cooling action of the thermoelectric element, respectively, according to the first embodiment of the present invention. Referring to FIGS. 9 and 10, the endothermic/exothermic device 33 may include a thermoelectric element (Peltier element). The thermoelectric element is a type of semiconductor device including multiple pairs of P-type semiconductors and N-type semiconductors connected electrically in series and thermally in parallel and capable of maintaining a constant temperature difference between the first side and the second side when a constant DC voltage is applied.

The thermoelectric element 33 releases the heat energy absorbed from the endothermic sealing tool 32 to the exothermic sealing tool 31, thereby maintaining the temperature difference between the exothermic sealing tool 31 and the endothermic sealing tool 32 constant. When a direct current voltage is applied to the thermoelectric element 33 with both of the exothermic sealing tool 31 and the endothermic sealing tool 32 at room temperature, the temperature of the exothermic sealing tool 31 may be elevated to be above the room temperature, and the temperature of the endothermic sealing tool 32 may be lowered to be below room temperature. Here, when the endothermic sealing tool 32 is provided on both sides of the exothermic sealing tool 31, the heat energy gained by the exothermic sealing tool 31 is twice the heat energy lost by each endothermic sealing tool 32.

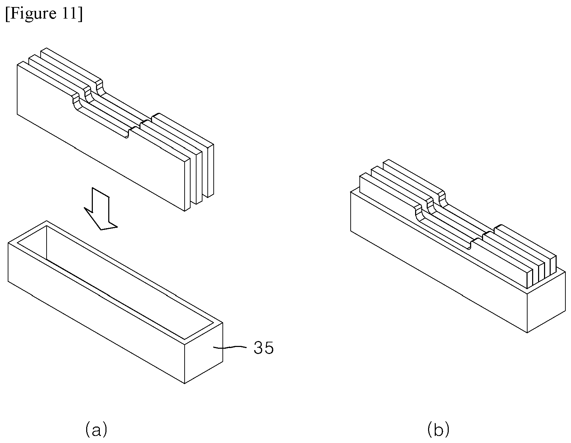

FIG. 11 illustrates the sealing tool assembly being accommodated in an insulating frame according to the first embodiment of the present invention. Referring to FIG. 11, the sealing apparatus may include a pair of insulating frames 35 accommodating a pair of sealing tool assemblies, respectively. The insulating frame 35 may be made of an insulating material entirely, or may be provided with an insulation layer that covers each side, preferably vertical sides from the inside or the outside. Preferably, each of the insulating frames 35 may have five closed sides covering five sides of each of the sealing tool assemblies, respectively, excluding a first heightwise end and a second heightwise end thereof facing the first sealed portion, respectively. Compared to a conventional sealing apparatus in which a sealing tool is fixed to a sealing block and an insulating frame covers only the sealing block, the sealing tool assembly itself is covered in the sealing apparatus according to the first embodiment such that heat loss due to radiant heat and convection heat generated from the sealing tool assembly along the horizontal direction may be more effectively reduced, and thus, energy efficiency is excellent.

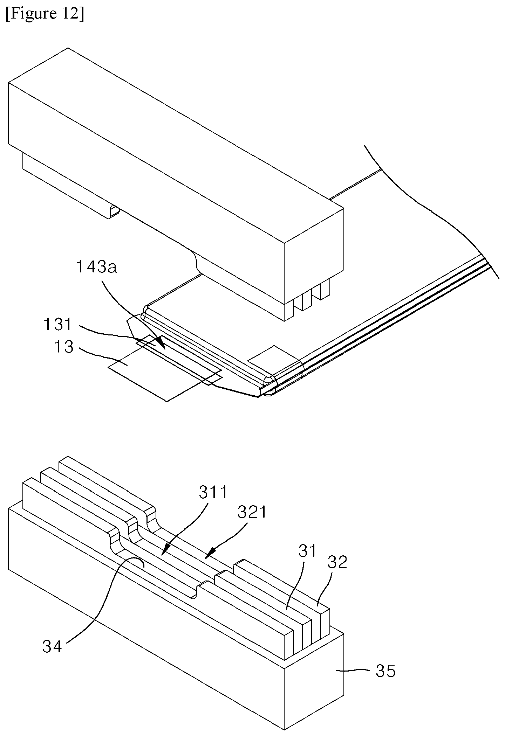

FIG. 12 illustrates an arrangement of the sealing apparatus according to the first embodiment of the present invention. Referring to FIG. 12, the sealing apparatus includes a pair of the sealing tool assemblies and a pair of the insulating frames 35 accommodating the pair of the sealing tool assemblies, respectively, and the pair of sealing apparatuses is provided at two sides of the first sealed portion 143a in heightwise direction of the pouch, respectively. When the first groove 311 and/or the second groove 321 are provided in the exothermic sealing tool 31 and/or the endothermic sealing tool 32, each of the sealing tool assemblies may be disposed in a manner that the first groove 311 and/or the second groove 321 face the first portion sealed 143a.

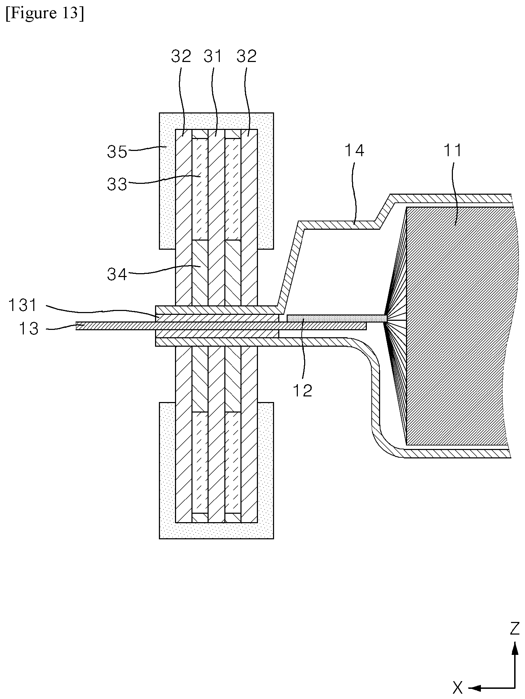

FIG. 13 is a cross-sectional view illustrating the sealing apparatus sealing the pouch according to the first embodiment of the present invention. Referring to FIG. 13, the exothermic sealing tool 31 of the sealing apparatus applies pressure and heats from above and below the portion to be sealed to fuse the internal insulating layer 142a and the lead film 131, thereby forming the first sealed portion 143a. Here, the endothermic sealing tool 32 is in contact with the pouch 14 at the two lengthwise sides of the portion to be sealed to cool the two lengthwise sides of the portion to be sealed, thereby preventing damage to the portion of the insulating layer 142 other than that of the insulating layer 142 provided at the portion to be sealed.

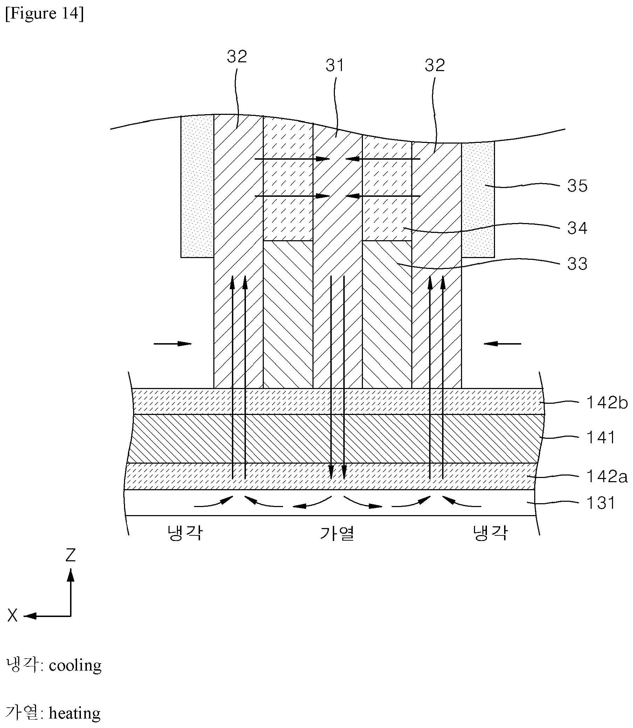

FIG. 14 illustrates the movement of heat when the sealing apparatus seals the pouch according to the first embodiment of the present invention. Referring to FIG. 14, when a predetermined direct current voltage is applied to the thermoelectric element 33, the thermoelectric element 33 absorbs the heat energy of the endothermic sealing tool 32 and radiates heat to the exothermic sealing tool 31 to maintain the temperature difference between the endothermic sealing tool 32 and the exothermic sealing tool 31 constant, thereby heating the exothermic sealing tool 31 to a temperature higher than room temperature and cooling the endothermic sealing tool 32 to a temperature lower than room temperature. Here, since heat transfer from the exothermic sealing tool 31 to the endothermic sealing tool 32 caused by due to conduction, radiation and convection is blocked by the insulating plate 34, only one way heat transfer from the endothermic sealing tool 32 to the exothermic sealing tool 31 occurs. Even when heat energy is transferred from the exothermic sealing tool 31 to the endothermic sealing tool 32, the heat energy is transferred back to the exothermic sealing tool 31 through the thermoelectric element 33. Additionally, due to the insulating plate 34 and the endothermic sealing tool 32, heat loss due to conduction, radiation and convection from the exothermic sealing tool 31 to the outside may also be blocked.

The heat energy absorbed by the exothermic sealing tool 31 is transferred to the internal insulating layer 142a and the lead film 131 inside the portion to be sealed through the surface of the portion to be sealed that is in contact with the exothermic sealing tool 31. The heat energy remaining after melting the internal insulating layer 142a and the lead film 131 is transferred to the two lengthwise sides of the first sealed portion 143a through the pouch 14, and the endothermic sealing tool 32 may absorb the transferred heat energy. That is, the endothermic sealing tool 32 absorbs the heat remaining after the exothermic sealing tool 31 melts the lead film 131 and the internal insulating layer 142a to form the first sealed portion 143a, and absorbed heat is supplied back to the exothermic sealing tool 31 through the thermoelectric element 33. Here, the endothermic sealing tool 32 may absorb heat energy not only from the pouch 14 but also from external air and supply absorbed heat energy back to the thermoelectric element 33.

In summary, the sealing apparatus according to the first embodiment of the present invention may absorb and utilize the energy remaining after forming the first sealed portion 143a, and the insulating plate 34 and the endothermic sealing tool 32 and the insulating frame 35 prevents heat loss caused by conduction, radiation and convection from the exothermic sealing tool 31 to the outside, resulting in high energy efficiency. At the same time, only the desired area may be targeted and sealed, and the adjacent portion may be cooled to below room temperature such that the risk of damage to the adjacent portion is reduced.

### [SECOND EMBODIMENT]

The sealing apparatus according to the second embodiment of the present invention may be used to form the second sealed portion 143b. Hereinafter, parts not separately described in the second embodiment are the same as in the first embodiment.

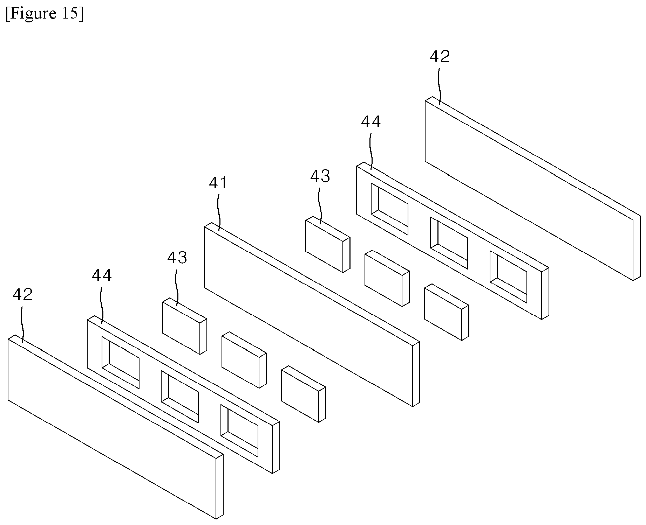

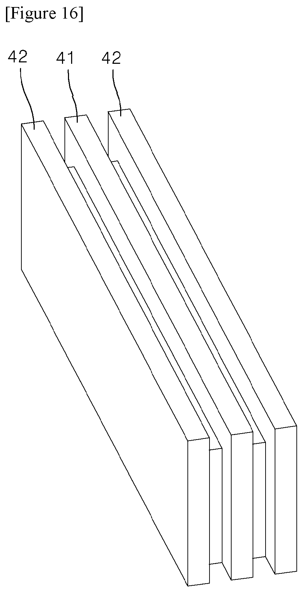

FIGS. 15 and 16 are exploded perspective view and perspective view, respectively, illustrating a structure of a sealing tool assembly according to a second embodiment of the present invention. Referring to FIGS. 15 and 16, the sealing apparatus according to the present invention may include a pair of sealing tool assemblies, each of the pair of sealing tool assemblies including an exothermic sealing tool 41, an endothermic sealing tool 42 and an endothermic/exothermic device 43.

An exothermic sealing tool 41 may include metal material and extend along the lengthwise direction of the pouch.

An endothermic sealing tool 42 may include metal material and extend along the lengthwise direction of the pouch.

The endothermic sealing tool 42 may be juxtaposed with the exothermic sealing tool 41 along the widthwise direction of the pouch. Here, one endothermic sealing tool 42 may be included in each sealing tool assembly, or two endothermic sealing tools 32 may be included in each sealing tool assembly. When one endothermic sealing tool 42 is provided in each sealing tool assembly, the endothermic sealing tool 42 may be disposed inner than the exothermic sealing tool 41 in the widthwise direction. When two endothermic sealing tools 32 are provided in each sealing tool assembly, the endothermic sealing tools 32 may be disposed at two widthwise sides of the exothermic sealing tool.

The endothermic/exothermic device 43 may be interposed between the exothermic sealing tool 41 and the endothermic sealing tool 42. The endothermic/exothermic device 43 may radiate heat through a first surface thereof and absorbs heat through a second surface thereof opposite to the first surface. The endothermic/exothermic device 43 may be provided in a manner that the first surface thereof is in contact with the exothermic sealing tool 41 and the second surface thereof in contact with the endothermic sealing tool 42. Accordingly, the endothermic/exothermic device 43 may heat the exothermic sealing tool 41 and cool the endothermic sealing tool 42. Preferably, when a voltage is applied to the endothermic/exothermic device 43, the first surface thereof radiates heat and the second surface thereof absorbs heat, thereby heating the exothermic sealing tool 41 and cooling the endothermic sealing tool 42. The endothermic/exothermic device 43 may include a thermoelectric element (Peltier element).

A plurality of endothermic/exothermic devices 43 may be provided to be in contact with wider surfaces of the exothermic sealing tool 41 and the endothermic sealing tool 42. Specifically, a plurality of endothermic/exothermic devices 43 arranged in grid formation may be provided to be in contact with surfaces of the exothermic sealing tool 41 and the endothermic sealing tool 42 parallel to the widthwise directions of the pouch. As the plurality of endothermic/exothermic devices 43 are in contact with the exothermic sealing tool 41 and the endothermic sealing tool 42 at plurality of points, heating and cooling may occur quickly and at a high level, and maintaining heated state and cooled state is facilitated.

The sealing tool assembly may include an insulating plate 44. The insulating plate 44 may be disposed in a space between the exothermic sealing tool 41 and the endothermic sealing tool 42 where the endothermic/exothermic device 43 is not provided. The insulating plate 44 may include an insulating material. The insulating plate 44 may be interposed between the exothermic sealing tool 41 and the endothermic sealing tool 42, and provided with a through-hole in which the endothermic/exothermic device 43 is mounted. By providing the insulating plate 44, heat conduction between the exothermic sealing tool 41 and the endothermic sealing tool 42 occurs only through the area where the endothermic/exothermic device 43 is provided, and heat energy of the exothermic sealing tool 41 is prevented from conducted to the endothermic sealing tool 42 through other portions.

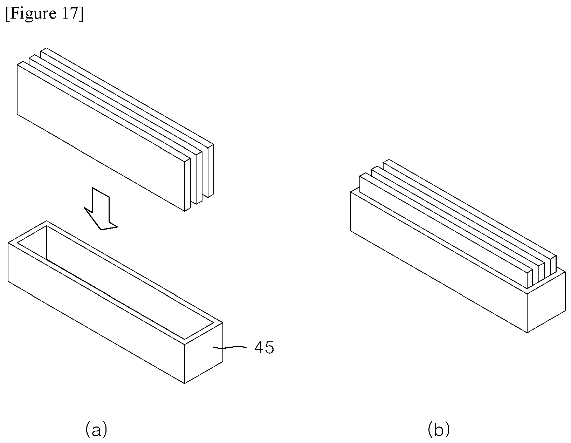

FIG. 17 illustrates the sealing tool assembly being accommodated in an insulating frame according to the second embodiment of the present invention. Referring to FIG. 17, the sealing apparatus may include a pair of insulating frames 35 accommodating a pair of sealing tool assemblies, respectively. The insulating frame 35 may be made of an insulating material entirely, or may be provided with an insulation layer that covers each side, preferably vertical sides from the inside or the outside. Preferably, each of the insulating frames 35 may have five closed sides covering five sides of each of the sealing tool assemblies, respectively, excluding a first heightwise end and a second heightwise end thereof facing the second sealed portion, respectively. Compared to a conventional sealing apparatus in which a sealing tool is fixed to a sealing block and an insulating frame covers only the sealing block, the sealing tool assembly itself is covered in the sealing apparatus according to the second embodiment such that heat loss due to radiant heat and convection heat generated from the sealing tool assembly along the horizontal direction may be more effectively reduced, and thus, energy efficiency is excellent.

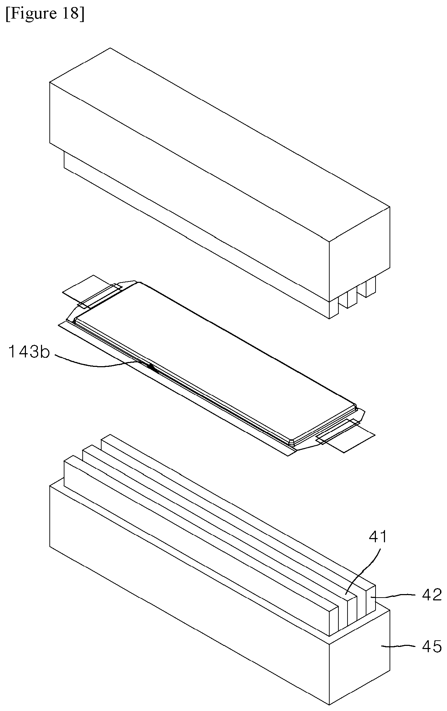

FIG. 18 illustrates an arrangement of the sealing apparatus according to the second embodiment of the present invention. Referring to FIG. 18, the sealing apparatus includes a pair of the sealing tool assemblies and a pair of the insulating frames 35 accommodating the pair of the sealing tool assemblies, respectively, and the pair of sealing apparatuses is provided at two sides of the second sealed portion 143a in heightwise direction of the pouch, respectively.

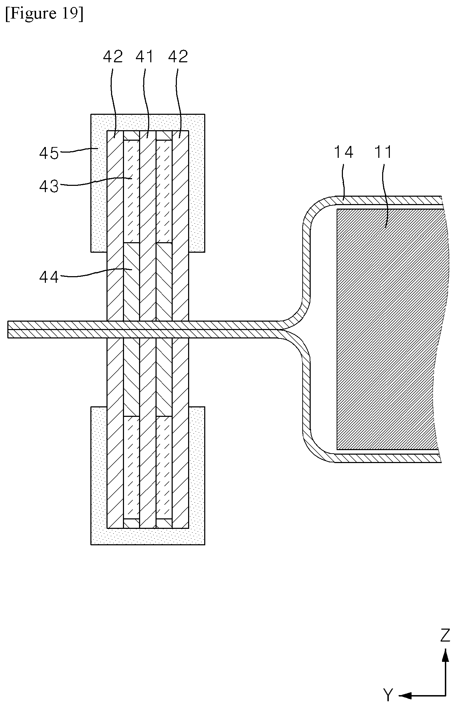

FIG. 19 is a cross-sectional view illustrating the sealing apparatus sealing the pouch according to the second embodiment of the present invention. Referring to FIG. 19, the exothermic sealing tool 41 of the sealing apparatus applies pressure and heats from above and below the portion to be sealed to fuse the internal insulating layer 142a, thereby forming the second sealed portion 143a. Here, the endothermic sealing tool 42 is in contact with the pouch 14 at the two widthwise sides of the portion to be sealed to cool the two widthwise sides of the portion to be sealed, thereby preventing damage to the portion of the insulating layer 142 other than that of the insulating layer 142 provided at the portion to be sealed.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A sealing apparatus for forming a first sealed portion by fusion provided at two lengthwise ends of a pouch of a pouch-type battery cell along a widthwise direction, the sealing apparatus comprising:
a pair of sealing tool assemblies provided above and below the first sealed portion, respectively, each of the pair of sealing tool assemblies comprising: an exothermic sealing tool extending along the widthwise direction; an endothermic sealing tool extending along the widthwise direction and juxtaposed with the exothermic sealing tool along a lengthwise direction; and an endothermic/exothermic device interposed between the exothermic sealing tool and the endothermic sealing tool,
wherein the endothermic/exothermic device simultaneously radiates and absorbs heat to the exothermic sealing tool and from the endothermic sealing tool, respectively.

2. The sealing apparatus of claim 1, wherein the endothermic/exothermic device radiates heat through a first surface thereof and absorbs heat through a second surface thereof opposite to the first surface as current is applied, and is interposed between the exothermic sealing tool and the endothermic sealing tool with the first side in contact with the exothermic sealing tool and the second side in contact with the endothermic sealing tool.

3. The sealing apparatus of claim 2, wherein the endothermic/exothermic device comprises a Peltier element radiating heat through the first side and absorbing heat through the second side.

4. The sealing apparatus of claim 1, wherein the pouch-type battery cell comprises an electrode lead extending from inside of the pouch and protruding through the first sealed portion, and
the exothermic sealing tool is provided with a first groove corresponding to a shape of the electrode lead.

5. The sealing apparatus of claim 4, wherein the endothermic sealing tool is provided with a second groove corresponding to the shape of the electrode lead.

6. The sealing apparatus of claim 1, wherein one endothermic sealing tool is provided for each sealing tool assembly and is disposed inner than the exothermic sealing tool in the lengthwise direction.

7. The sealing apparatus of claim 1, wherein two endothermic sealing tools are provided for each sealing tool assembly and are disposed at two lengthwise sides of the exothermic sealing tool.

8. The sealing apparatus of claim 1, wherein each of the pair of sealing tool assemblies further comprises an insulating plate disposed in a space between the exothermic sealing tool and the endothermic sealing tool where the endothermic/exothermic device is not provided.

9. The sealing apparatus of claim 1, further comprising a pair of insulating frames accommodating the pair of sealing tool assemblies, respectively.

10. The sealing apparatus of claim 9, wherein each of the insulating frames has five closed sides covering five sides of each of the sealing tool assemblies, respectively, excluding a first heightwise end and a second heightwise end thereof facing the first sealed portion, respectively.

11. A sealing apparatus for forming a second sealed portion by fusion provided at one widthwise end of a pouch of a pouch-type battery cell along a lengthwise direction, the sealing apparatus comprising:
a pair of sealing tool assemblies provided above and below the second sealed portion, respectively, each of the pair of sealing tool assemblies comprising: an exothermic sealing tool extending along the lengthwise direction; an endothermic sealing tool extending along the lengthwise direction and juxtaposed with the exothermic sealing tool along a widthwise direction; and an endothermic/exothermic device interposed between the exothermic sealing tool and the endothermic sealing tool,
wherein the endothermic/exothermic device simultaneously radiates and absorbs heat to the exothermic sealing tool and from the endothermic sealing tool, respectively.

12. The sealing apparatus of claim 11, wherein the endothermic/exothermic device radiates heat through a first surface thereof and absorbs heat through a second surface thereof opposite to the first surface as current is applied, and is interposed between the exothermic sealing tool and the endothermic sealing tool with the first side in contact with the exothermic sealing tool and the second side in contact with the endothermic sealing tool.

13. The sealing apparatus of claim 12, wherein the endothermic/exothermic device comprises a Peltier element radiating heat through the first side and absorbing heat through the second side.

14. The sealing apparatus of claim 11, wherein one endothermic sealing tool is provided for each sealing tool assembly and is disposed inner than the exothermic sealing tool in the widthwise direction.

15. The sealing apparatus of claim 11, wherein two endothermic sealing tools are provided for each sealing tool assembly and are disposed at two widthwise sides the exothermic sealing tool.

16. The sealing apparatus of claim 11, wherein each of the pair of sealing tool assemblies further comprises an insulating plate disposed in a space between the exothermic sealing tool and the endothermic sealing tool where the endothermic/exothermic device is not provided.

17. The sealing apparatus of claim 11, further comprising a pair of insulating frames accommodating the pair of sealing tool assemblies, respectively.

18. The sealing apparatus of claim 17, wherein each of the insulating frames has five closed sides covering five sides of each of the sealing tool assemblies, respectively, excluding first and second heightwise ends thereof facing the second sealed portion, respectively.
